# EUROPEAN PATENT APPLICATION

(11) **EP 2 281 788 A1**
(43) Date of publication of application: **09.02.2011**
(21) Application number: 09167392.1
(22) Date of filing: 06.08.2009
(51) Int. Cl.: C04B 28/36

(54) **Modified sulphur composition and product comprising modified sulphur composition as binder**

(71) Applicant: Shell Internationale Research Maatschappij B.V., 2596 HR The Hague (NL)
(72) Inventor: Hamelink, Cornelis Pieter, 1031 HW Amsterdam (NL); Verbist, Guy Lode Magda Maria, 1031 HW Amsterdam (NL); Hristova, Denka Georgieva, 5600 MB Eindhoven (NL)
(74) Representative: Matthezing, Robert Maarten

(57) **Abstract**

The present invention provides a modified sulphur composition comprising: (a) (i) a modified sulphur prepared by admixing molten elemental sulphur with one or more olefinic sulphur modifiers selected from norbornenes; and/or (ii) a modified sulphur prepared by admixing molten elemental sulphur with one or more olefinic sulphur modifiers selected from dicyclopentadiene, cyclopentadiene and oligomers of dicyclopentadiene; and (b) a modified sulphur prepared by admixing molten elemental sulphur with one or more olefinic sulphur modifiers selected from styrene and derivatives thereof, dicyclopentadiene, cyclopentadiene, dipentene, oligomers of dicyclopentadiene, naphthalene and limonene, provided that the modified sulphur (a) is different to the modified sulphur (b); the present invention further provides a product comprising a modified sulphur composition as binder which is prepared by admixing the afore-mentioned modified sulphur composition, a filler and/or aggregate, and optionally elemental sulphur at a temperature above the melting temperature of sulphur and solidifying the mixture obtained by cooling the mixture to a temperature below the melting temperature of sulphur.

## Description

### Field of the Invention

The invention provides a modified sulphur composition and a product comprising said modified sulphur composition as binder prepared by admixing the modified sulphur composition, a filler and/or aggregate, and optionally elemental sulphur at a temperature above the melting temperature of sulphur and solidifying the mixture obtained by cooling the mixture to a temperature below the melting temperature of sulphur.

### Background of the Invention

Conventional construction materials such as mortar or concrete based on Portland cement have a good durability under alkaline conditions. Their acid resistance is, however, poor. Under acidic conditions, construction materials with sulphur as binder may be used, since these materials show a very good stability under acidic conditions. The alkaline resistance of sulphur-bound products is, however, poor, especially if compared with Portland cement products.

In sulphur-bound materials such as sulphur cement or sulphur cement-aggregate composites, elemental sulphur is used as binder. The sulphur used in such products is typically modified or plasticised in order to prevent allotropic transformation of the solid sulphur. Modified sulphur is typically prepared by reacting a portion of the sulphur with a sulphur modifier, also referred to as sulphur plasticiser. A well-known category of sulphur modifiers, are olefinic compounds that co-polymerise with sulphur. Known examples of such olefinic sulphur modifiers are dicyclopentadiene, limonene, styrene or naphthalene. Reference is for example made to B.R. Currell et al. "Plasticization of Sulfur" In: J.R. West(ed.), Proceedings of symposium "New Uses of Sulfur", Los Angeles, April 1974, Advances in Chemistry Series No. 140, Am. Chem. Soc., Washington, 1975, p. 1-17.

Plasticised or modified sulphur may be used in the form of a so-called concentrate, i.e. sulphur reacted with a relatively high amount of modifier. For the preparation of the sulphur-bound product, e.g. concrete, the concentrate is then mixed at a temperature above the melting temperature of sulphur with further sulphur, filler and aggregate, and solidified.

The use of ethylidene norbornene or 5-vinyl norbornene as sulphur modifier is known in the art. In *Research Disclosure no. 22924*, *1983,* it is mentioned that ethylidene norbornene or 5-vinyl norbornene may be used as a sulphur plasticiser. In the examples therein, plasticised sulphur is prepared by reacting elemental sulphur with 40-43 wt. % olefinic plasticisers (as a blend including ethylidene norbornene and 5-vinyl norbornene), based on the weight of sulphur. The resulting plasticised sulphur is a black glassy solid and thus not suitable to be further processed into sulphur-bound products such as cement, mortar or concrete.

Furthermore, EP 1961713 A1 describes a method for producing a binding material containing a modified sulphur composed of 100 parts by mass of sulphur and 0.1 to 25 parts by mass of ethylidene norbornene.

WO-A-2006/134130 describes a modified sulphur prepared by admixing molten elemental sulphur with one or more olefinic sulphur modifiers, wherein at least 50 wt. % of the olefinic sulphur modifiers is 5-ethylidene-2-norbornene and/or 5-vinyl-2-norbornene and wherein the total amount of olefinic sulphur modifiers is in the range of from 0.1 to 20 wt. % based on the weight of sulphur.

Given the relatively high cost of modifiers such as 5-ethylidene-2-norbornene, it is economically attractive to be able to reduce the amount of said modifier in a modified sulphur.

JP 08-003317 A discloses a modified sulphur which is said to have improved handling characteristics during manufacture and improved product characteristics.

The modified sulphur of JP 08-003317 A employs a combination of 5-ethylidene-2-norbornene and styrene as the modifier. Said modifier comprises from 10 to 90 wt. % of 5-ethylidene-2-norbornene.

The modified sulphur of JP 08-003317 A is prepared by effecting a reaction of sulphur at 110-160 °c with a reaction agent comprising the afore-mentioned combination of 5-ethylidene-2-norbornene and styrene, that is to say, the modified sulphur is prepared by so-called "chemical mixing" of the modifiers with sulphur.

It has now been surprisingly found in the present invention that physical compositions of modified sulphurs prepared from different modifiers (i.e. prepared by so-called "physical mixing") exhibit delayed crystallisation and a larger amorphous fraction in the binder than similar modified sulphurs prepared by chemical mixing using combinations of the same modifiers. This is advantageous as the structural change in sulphur, which leads to shrinkage and embrittlement of sulphur concrete is retarded.

### Summary of the Invention

Accordingly, the present invention provides a modified sulphur composition comprising: (a) (i) a modified sulphur prepared by admixing molten elemental sulphur with one or more olefinic sulphur modifiers selected from norbornenes; and/or (ii) a modified sulphur prepared by admixing molten elemental sulphur with one or more olefinic sulphur modifiers selected from dicyclopentadiene, cyclopentadiene and oligomers of dicyclopentadiene; and (b) a modified sulphur prepared by admixing molten elemental sulphur with one or more olefinic sulphur modifiers selected from styrene and derivatives thereof, dicyclopentadiene, cyclopentadiene, dipentene, oligomers of dicyclopentadiene, naphthalene and limonene, provided that the modified sulphur (a) is different to the modified sulphur (b).

In a further aspect, the present invention provides a product comprising a modified sulphur composition as binder which is prepared by admixing a modified sulphur composition as hereinbefore defined, a filler and/or aggregate, and optionally elemental sulphur at a temperature above the melting temperature of sulphur and solidifying the mixture obtained by cooling the mixture to a temperature below the melting temperature of sulphur.

### Detailed Description of the Invention

The modified sulphur composition of the present invention preferably comprises in the range of from 10 to 90 wt. % of the hereinbefore described modified sulphur (a); and in the range of from 90 to 10 wt. % of the hereinbefore described modified sulphur (b), based on the total weight of the modified sulphur composition.

In embodiments of the present invention wherein the modified sulphur (a) comprises two modified sulphurs (i) and (ii) as hereinbefore described, then it is preferred that said modified sulphur (a) comprises in the range of from 10 to 90 wt. % of the hereinbefore described modified sulphur (i) and from 90 to 10 wt. % of the hereinbefore described modified sulphur (ii), based on the total weight of the modified sulphur (a).

The total amount of olefinic sulphur modifiers in the modified sulphur (a) is preferably in the range of from 0.1 to 20 wt. %, more preferably in the range of from 5 to 20 wt. %, based on the weight of sulphur in (a).

The total amount of olefinic sulphur modifiers in modified sulphur (b) is preferably in the range of from 0.1 to 20 wt. %, more preferably in the range of from 5 to 20 wt. %, based on the weight of sulphur in (b).

Preferred norbornenes for use in the modified sulphur (a) of the present invention are 5-ethylidene-2-norbornene and 5-vinyl-2-norbornene.

In a preferred embodiment of the present invention, no olefinic sulphur modifiers other than 5-ethylidene-2-norbornene or 5-vinyl-2-norbornene are admixed with elemental sulphur in modified sulphur (a).

Furthermore, in particularly preferred embodiment of the present invention, no olefinic sulphur modifiers other than 5-ethylidene-2-norbornene are admixed with elemental sulphur in modified sulphur (a).

In another preferred embodiment of the present invention, no olefinic sulphur modifiers other than styrene and derivatives thereof are admixed with the elemental sulphur in modified sulphur (b).

The total amount of olefinic sulphur modifiers in modified sulphur composition of the present invention is preferably in the range of from 5 to 15 wt. %, more preferably in the range of from 7 to 12 wt. %, based on the weight of sulphur in said composition.

In another embodiment of the present invention, the modified sulphur composition preferably comprises a total amount in the range of from 0.1 to 5.0 wt. %, more preferably in the range of from 0.1 to 4.0 wt. % and most preferably in the range of from 0.1 to 3.0 wt. %, of olefinic sulphur modifiers, based on the weight of sulphur in said composition.

The product according to the present invention which comprises the afore-mentioned modified sulphur composition as binder, in combination with a filler and/or aggregate, and optionally elemental sulphur preferably comprises a total amount of olefinic sulphur modifier present in the modified sulphur composition of at most 5.0 wt. %, more preferably in an amount in the range of from 0.1 to 4.0 wt. % and most preferably in the range of from 0.1 to 3.0 wt. %, of the total weight of sulphur in the product.

The product of the present invention is preferably a sulphur cement or a sulphur cement-aggregate composite.

A preferred product of the present invention is that which may be prepared by admixing a modified sulphur composition as hereinbefore described with elemental sulphur, and a filler and/or aggregate.

Another preferred product of the present invention is that which may be prepared by admixing a modified sulphur composition as hereinbefore described with a filler and/or aggregate.

The modified sulphur composition according to the present invention is prepared by admixing (a) (i) a modified sulphur prepared by admixing molten elemental sulphur with one or more olefinic sulphur modifiers selected from norbornenes; and/or (ii) a modified sulphur prepared by admixing molten elemental sulphur with one or more olefinic sulphur modifiers selected from dicyclopentadiene, cyclopentadiene and oligomers of dicyclopentadiene; and (b) a modified sulphur prepared by admixing molten elemental sulphur with one or more olefinic sulphur modifiers selected from styrene and derivatives thereof, dicyclopentadiene, cyclopentadiene, dipentene, oligomers of dicyclopentadiene, naphthalene and limonene, provided that the modified sulphur (a) is different to the modified sulphur (b).

The afore-mentioned modified sulphurs (a) and (b) may be prepared by mixing molten elemental sulphur with one or more olefinic sulphur modifiers, as required.

Preparation of modified sulphurs (a)(i), (a)(ii) and (b) is known in the art. Molten elemental sulphur and one or more of the afore-mentioned modifiers are admixed at a temperature above the melting temperature of sulphur, i.e. above 120 °C, and below the boiling temperature of the modifier to let part of the sulphur react with the modifiers. Typically, the temperature is in the range of from 120 to 150 °C. The modified sulphurs (a) and (b) may be each prepared by admixing the sulphur and the modifiers at any suitable temperature, preferably at a temperature in the range of from 120 to 150 °C, more preferably of from 130 to 140 °C.

The elemental sulphur that is admixed with the modifiers in the preparation of the modified sulphurs (a) and (b) may be obtained from any source. Typically, the elemental sulphur will be elemental sulphur obtained as by-product from the desulphurisation of crude oil, natural gas or ores. The elemental sulphur may comprise small amounts of contaminants typically in a concentration ranging from a few milligrams to a few grams per kilogram, for example mercaptans.

The total amount of olefinic sulphur modifiers admixed with the sulphur in the preparation processes to prepare the modified sulphurs (a) and (b) is preferably in the range of from 0.1 to 20 wt. %, based on the weight of sulphur. A smaller amount, i.e. less than 0.1 wt. %, may not provide for the desired modification effect in each of said modified sulphurs (a) and (b), i.e. prevention of the allotropic transformation of the solid sulphur. It is known from the prior art that higher amounts of olefinic sulphur modifiers in said modified sulphurs (a) and (b), i.e. above 20 wt. %, may result in modified sulphurs with undesirable mechanical properties and of darker colour. Moreover, the thus-obtained modified sulphurs would not be soluble any more in further molten elemental sulphur and can thus not be used as modified sulphur concentrates to prepare the product of the present invention.

The modified sulphur (a)(i) may be conveniently prepared as compared to some of the modified sulphurs (a)(ii) or (b). In particular, the use of 5-ethylidene-2-norbornene and/or 5-vinyl-2-norbornene as modifier in modified sulphur (a)(i) allows easier processing. That is to say, the reaction of 5-ethylidene-2-norbornene and/or 5-vinyl-2-norbornene with sulphur can take place at a temperature below its boiling temperature and, thus, the modified sulphur preparation can be carried out without refluxing of the modifier.

In contrast, dicyclopentadiene, which may be used as a modifier in modified sulphur (a)(ii) or (b) requires different handling as the dicyclopentadiene dimer reverts to its volatile monomer during processing and therefore has to be reacted with sulphur under refluxing conditions.

For modified sulphur (a), it is preferred that at least 80 wt. % of the olefinic modifiers admixed with the molten sulphur is 5-ethylidene-2-norbornene and/or 5-vinyl-2-norbornene, more preferably no other olefinic modifiers than 5-ethylidene-2-norbornene and/or 5-vinyl-2-norbornene are used in the preparation of the modified sulphur (a). Even more preferably, 5-ethylidene-2-norbornene is the only modifier used in the modified sulphur (a).

The modified sulphur composition according to the present invention is particularly suitable to be used in products comprising modified sulphurs as a binder. Examples of such sulphur-bound products are sulphur cement and sulphur cement-aggregate composites such as sulphur mortar, sulphur concrete or sulphur-extended asphalt.

Sulphur cement is known in the art and typically comprises modified sulphur, usually in an amount of at least 50 wt. %, and a filler. Usual sulphur cement fillers are particulate inorganic material with an average particle size in the range of from 0.1 µm to 0.1 mm. Examples of such sulphur cement fillers are fly ash, limestone, quartz, iron oxide, alumina, titania, graphite, gypsum, talc, mica or combinations thereof. The filler content of sulphur cement may vary widely, but is typically in the range of from 5 to 50 wt. %, based on the total weight of the cement.

Reference herein to sulphur cement-aggregate composites is to a composite comprising both sulphur cement and aggregate. Examples of sulphur cement-aggregate composites are sulphur mortar, sulphur concrete and sulphur-extended asphalt. Mortar comprises fine aggregate, typically with particles having an average diameter between 0.1 and 5 mm, for example sand. Concrete comprises coarse aggregate, typically with particles having an average diameter between 5 and 40 mm, for example gravel or rock. Sulphur-extended asphalt is asphalt, i.e. typically aggregate with a binder that contains filler and a residual hydrocarbon fraction, wherein part of the binder has been replaced by sulphur, usually modified sulphur.

As hereinbefore described, the sulphur-bound products according to the present invention are prepared by admixing the modified sulphur composition according to the present invention with a filler and/or aggregate and optionally further elemental sulphur.

It will be appreciated that it depends on the desired product and on the amount of modifier-sulphur reaction products in the modified sulphur composition what components in what amounts will be admixed.

Preferably, the total amount of olefinic modifiers used in the preparation of the modified sulphur composition used does not exceed 5 wt. % of the weight of sulphur in the final product, i.e. the sulphur-bound product.

Reference herein to the weight of sulphur in the sulphur-bound product is to the total amount of sulphur used, i.e. the amount of sulphur mixed with the modifier(s) in the preparation of modified sulphurs (a) and (b) and the amount of sulphur that is optionally admixed with the modified sulphurs (a) and (b) (i.e. the modified sulphur composition) and the filler/aggregate in the product preparation.

Preferably, the total amount of olefinic modifiers in the final product is below 5 wt. % of the total amount of sulphur in the final product. An advantage of using a relatively low amount of olefinic modifiers is that the time needed for solidification is minimised. More preferably, the total amount of olefinic modifiers used in the final product is in the range of from 0.1 to 4.0 wt. % of the total weight of sulphur in the product, even more preferably in the range of from 0.1 to 3.0 wt. % of the total weight of sulphur in the product.

Preferably, a so-called modified sulphur composition concentrate may be used in the preparation of the sulphur-bound product according to the present invention, i.e. a modified sulphur composition that has been prepared with an amount of modifiers that is higher than that desired in the sulphur-bound product. In that case, modified sulphurs (a) and (b) and elemental sulphur are admixed with filler and/or aggregate in the preparation of the sulphur-bound product. An advantage of starting with a modified sulphur composition concentrate is that transportation costs are limited if the modified sulphur composition is manufactured at a different place than the sulphur-bound product.

Preferably, a modified sulphur composition concentrate prepared by admixing sulphur with a total amount of from 5 to 15 wt. % olefinic modifier is used, more preferably a total amount of from 7 to 12 wt. %, based on the weight of sulphur.

Alternatively, a modified sulphur composition already comprising all the sulphur present in the resulting sulphur-bound product may be used. In that case, a modified sulphur composition prepared by admixing sulphur with a total amount in the range of from 0.1 to 5.0 wt. % olefinic modifier is preferably used, more preferably with a total amount in the range of from 0.1 to 4.0 wt. % olefinic modifier, even preferably with a total amount in the range of from 0.1 to 3.0 wt. % olefinic modifier, based on the weight of sulphur.

In the preparation of the product of the present invention, it will be appreciated that the modified sulphur composition of the present invention may be pre-prepared and then admixed with a filler and/or aggregate, and optionally elemental sulphur.

Alternatively, said modified sulphur composition may be prepared in situ during the preparation of the product of the present invention by admixing modified sulphurs (a) and (b) as hereinbefore described with a filler and/or aggregate, and optionally elemental sulphur.

### Examples

The present invention is further illustrated by means of the following non-limiting examples.

Differential scanning calorimetry (DSC) was performed on samples prepared by both chemical and physical mixing with differing amounts of styrene and 5-ethylidene-2-norbornene (ENB) modifiers. In all cases, a total of 10 wt. % modifier was applied.

A first modified sulphur (Sample 1; comparative) was prepared by a chemical mixing methodology as follows (Method 1):
90g of elemental sulphur was weighed into a round bottomed flask. The sulphur was melted by placing the flask in an oil bath at 140 °C. A cooler was placed on top of the flask and work was conducted under an inert atmosphere (argon or nitrogen). Once the sulphur was molten, 8g of styrene and 2g of ENB were added to the flask using a syringe or dropping funnel. The flask was closed immediately and subsequently stirred by means of a magnetic stirrer for 1 hour. The mixture was poured into an aluminium cup and left to cool down.

Further modified sulphurs comprising 90g sulphur, 5g styrene and 5g of ENB (Sample 2; comparative) and 90g sulphur with 4g of styrene and 6g of ENB (Sample 3; comparative) were prepared in the same way as Sample 1 (by Method 1).

A fourth modified sulphur (Sample 4; according to the present invention) was prepared by a physical mixing methodology as follows (Method 2):
90g of elemental sulphur was weighed into a glass round bottomed flask. The sulphur was melted by placing the flask in an oil bath at 140 °C. A cooler was placed on top of the flask and work was conducted under an inert atmosphere (argon or nitrogen). Once the sulphur was molten, 10g of styrene was added to the flask. The flask was closed immediately and subsequently stirred by means of a magnetic stirrer for 1 hour. At the same time, 10g of ENB were added to 90g of molten sulphur in a second flask and stirred for one hour, under an inert atmosphere. After stirring, 80g of the modified sulphur from the first flask was combined with 20g of the modified sulphur from the second flask. The new mixture was poured into an aluminium cup and left to cool down.

Further modified sulphurs were made in the same way as Sample 4 (Method 2), by combining amounts from a first modified sulphur (90g of sulphur with 10g of styrene) and a second modified sulphur (90g of sulphur with 10g of ENB): 50g with 50g respectively(Sample 5; according to the present invention) and 40g with 60g (Sample 6; according to the present invention).

The samples prepared by the above methodologies were as follows:-

**Table 1**

| Sample | Mixing Method | Styrene (wt. %) | ENB (wt. %) |
|---|---|---|---|
| 1 | Chemical | 8 | 2 |
| 2 | Chemical | 5 | 5 |
| 3 | Chemical | 4 | 6 |
| 4 | Physical | 8 | 2 |
| 5 | Physical | 5 | 5 |
| 6 | Physical | 4 | 6 |

8-10 mg of the modified sulphur samples were loaded into high pressure stainless steel pans, for DSC measurement. The instrument used for the DSC was a Q100. The measurements were conducted under a nitrogen atmosphere.

For the first heating, the sample was warmed from room temperature to 140 °C at a ramp rate of 10 °C per minute, followed by an equilibration period (isothermal step) of 5 minutes. For the subsequent (first) cooling run, the sample was then returned to room temperature, again at a rate of 10 °C per minute, followed by an isothermal step of only 1 minute. A second cycle (heating and cooling runs) was then performed in the same way as described for the first cycle. The data collection was performed for 0.25 seconds per point throughout.

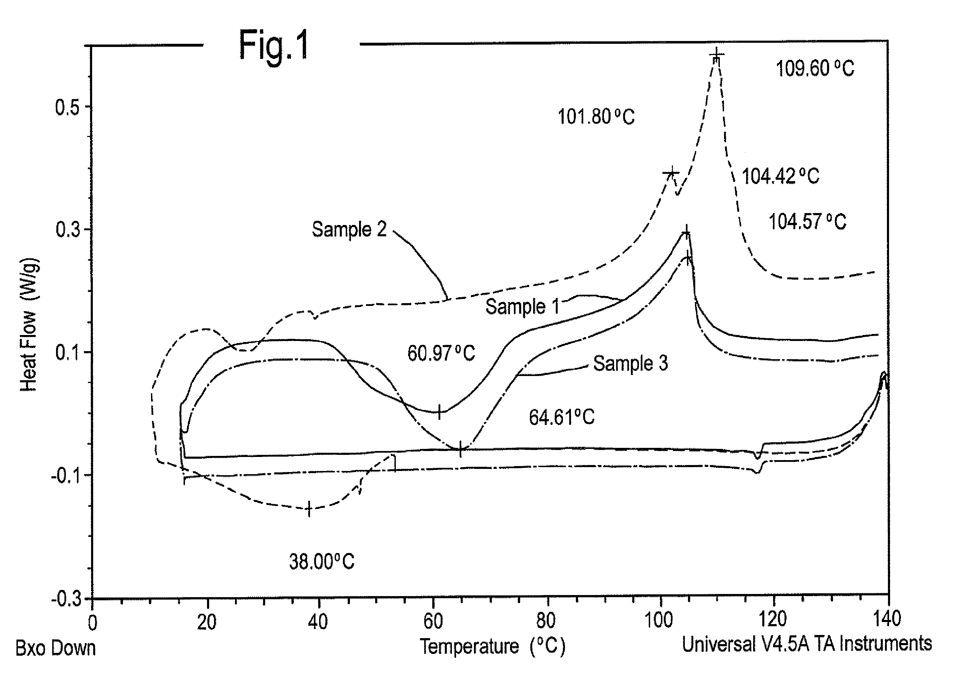

Figure 1 shows the DSC traces for the first cooling and subsequent (second) heating runs of Samples 1, 2 and 3.

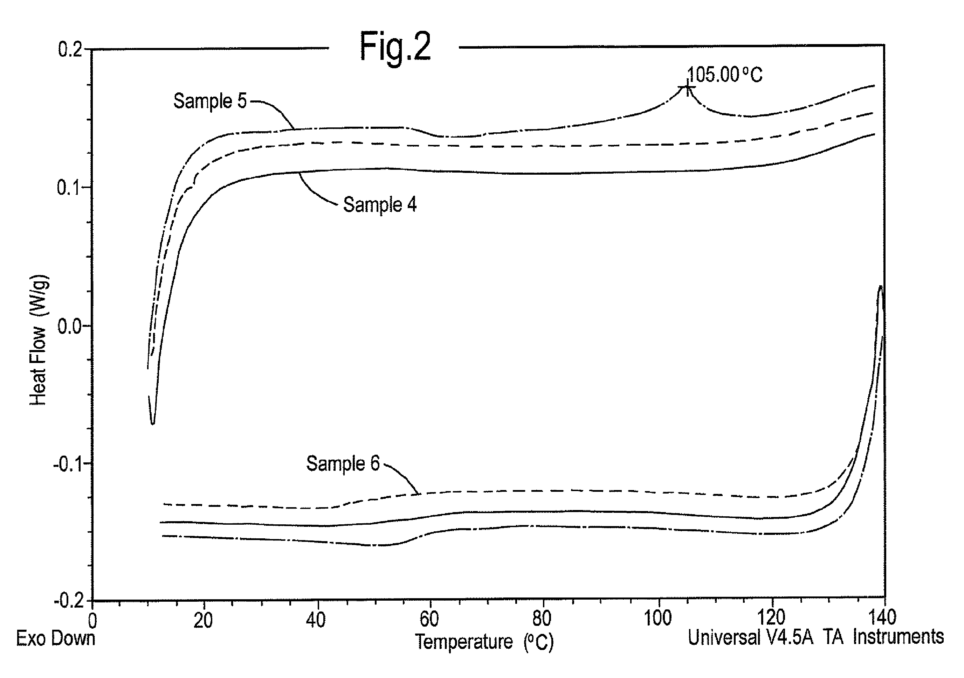

Figure 2 shows the DSC traces for the cooling and subsequent (second) heating runs of Samples 4, 5 and 6.

In the case of Sample 2 speaks for both crystallographic forms of sulphur are present in the trace of the second heat. In the case of Sample 5, only one very broad peak is present in the trace of the second heat.

Samples 1 and 3 show retarded crystallisation on the first cool and only one distorted peak is seen in the subsequent heat. For Samples 4 and 6, there is very little evidence of crystallisation on either cooling or subsequent warming.

Thus, the lower crystallinity of Sample 5 compared with Sample 2 is clear, as is the lower crystallinity of Samples 4 and 6 compared with Samples 1 and 3. It is also notable that the greatest crystallinity of Samples 1 to 3 occurs for Sample 2. The greatest crystallinity of Samples 4 to 6 occurs for Sample 5. In other words, the samples containing an equal weight % of ENB and styrene give the highest crystallinity, for both preparation by Method 1 and 2.

## Claims

1. Modified sulphur composition comprising:
(a)
(i) a modified sulphur prepared by admixing molten elemental sulphur with one or more olefinic sulphur modifiers selected from norbornenes; and/or
(ii) a modified sulphur prepared by admixing molten elemental sulphur with one or more olefinic sulphur modifiers selected from dicyclopentadiene, cyclopentadiene and oligomers of dicyclopentadiene; and
(b) a modified sulphur prepared by admixing molten elemental sulphur with one or more olefinic sulphur modifiers selected from styrene and derivatives thereof, dicyclopentadiene, cyclopentadiene, dipentene, oligomers of dicyclopentadiene, naphthalene and limonene,
provided that the modified sulphur (a) is different to the modified sulphur (b).

2. Modified sulphur composition according to Claim 1, wherein the total amount of olefinic sulphur modifiers in modified sulphur (a) is in the range of from 0.1 to 20 wt. %, based on the weight of sulphur in (a).

3. Modified sulphur composition according to Claim 1 or 2, wherein the total amount of olefinic sulphur modifiers in modified sulphur (b) is in the range of from 0.1 to 20 wt. %, based on the weight of sulphur in (b).

4. Modified sulphur composition according to any one of Claims 1 to 3, wherein no olefinic sulphur modifiers other than 5-ethylidene-2-norbornene or 5-vinyl-2-norbornene are admixed with elemental sulphur in modified sulphur (a).

5. Modified sulphur composition according to any one of Claims 1 to 4, wherein no olefinic sulphur modifiers other than styrene and derivatives thereof are admixed with elemental sulphur in modified sulphur (b).

6. Modified sulphur composition according to any one of Claims 1 to 5, wherein the total amount of olefinic sulphur modifiers in said composition is in the range of from 5 to 15 wt. %, based on the weight of sulphur in said composition.

7. Modified sulphur composition according to any one of Claims 1 to 5, wherein the total amount of olefinic sulphur modifiers in said composition is in the range of from 0.1 to 5.0 wt. %, based on the weight of sulphur in said composition.

8. A product comprising a modified sulphur composition as binder which is prepared by admixing a modified sulphur composition according to any one of Claims 1 to 7, a filler and/or aggregate, and optionally elemental sulphur at a temperature above the melting temperature of sulphur and solidifying the mixture obtained by cooling the mixture to a temperature below the melting temperature of sulphur.

9. A product according to Claim 8, wherein the total amount of olefinic sulphur modifier present in the modified sulphur composition is at most 5 wt. % of the total weight of sulphur in the product.

10. A product according to Claim 8 or 9, wherein the product is sulphur cement or a sulphur cement-aggregate composite.

11. A product according to any one of Claims 8 to 10, which is prepared by admixing modified sulphur composition according to Claim 6, elemental sulphur, and a filler and/or aggregate.

12. A product according to any one of Claims 8 to 10, which is prepared by admixing modified sulphur composition according to Claim 7 and a filler and/or aggregate.

13. A product according to any one of Claims 9 to 12, wherein the total amount of olefinic sulphur modifier present in the modified sulphur composition is in the range of from 0.1 to 4.0 wt. % of the total weight of sulphur in the product.
